# EUROPEAN PATENT APPLICATION

(11) **EP 1 681 650 A2**
(43) Date of publication of application: **19.07.2006**
(21) Application number: 06112968.0
(22) Date of filing: 27.06.2003

(54) **Delivery module and related platforms for business driven learning solution**

(30) Priority: 28.06.2002 US 391929 P; 28.06.2002 US 391932 P; 29.07.2002 US 398814 P
(62) Divisional of application: 03076999.6
(71) Applicant: Accenture Global Services GmbH, 8200 Schaffhausen (CH)
(72) Inventor: DRAPER, William Christopher Jr., New York, NY 10021 (US); MARGASON, Scott Leigh, Centennial, CO 80122 (US); GARRIGAN, Heide E., Denver, CO 80207 (US); STOVALL, Thomas Kenneth, Marietta, GA 30067 (US); HUBBELL, John R., Evanston, IL 60201 (US)
(74) Representative: Siniscalco, Fabio

(57) **Abstract**

Disclosed is a delivery module and related platforms and processes for a business driven learning solution for managing the learning and training needs of an enterprise in a manner that is responsive to dynamic business needs. The inventions employs sub-modules of interrelated and interdependent business processes for the planning of the learning delivery, execution of the delivery, wrap-up of the learning delivery effort, and a compilation of delivery operations support processes. Embodiments of the inventions disclosed include a delivery module and related platforms and processes may be outsourced by organizations whereby the processes of the learning solution are implemented by a third party learning services provider under contract to an organization. As a result, learning content is presented in a consistent, cost-effective and high-quality manner while continuously tied to an organization's strategic business objectives.

## Description

### Cross Reference To Related Applications

This application claims priority from U.S. Provisional Patent Application Serial No. 60/391,932, filed June 28, 2002, from U.S. Provisional Patent Application Serial No. 60/391,929, filed June 28, 2002, and from U.S. Provisional Patent Application Serial No. 60/398,814 filed July 29, 2002. Furthermore, the present application is related in subject matter to U.S. Patent Application Serial No. 10/265,156, filed October 7, 2002, the specification of which is hereby incorporated by reference in its entirety.

### Field of the Invention

The invention disclosed relates to a delivery module and related platforms and processes for a business driven learning solution for managing the learning and training needs of an enterprise in a manner that is responsive to dynamic business needs. Among other things, the delivery module disclosed contains business processes and related tools for providing the delivery of high quality training across a plurality of media in a cost efficient manner. In an implementation of the present invention, the delivery module and related platforms and processes may be outsourced by organizations whereby the processes of the learning solution are implemented by a third party learning services provider under contract to an organization.

### Background Of The Invention

Employee training and education is becoming increasingly critical to the success of organizations within today's modern global economy. As a minimum requirement to remaining competitive, companies that operate in today's complex industries need employees who remain knowledgeable and current in areas of expertise that serve the companies' ever-evolving strategic objectives. Executives of such companies feel this need for improved learning solutions as it is brought to the forefront of their strategic objectives by various business imperatives of the competitive market.

There are a number of forces driving the need for organizations to improve their training organizations. Organization executives are facing urgent business imperatives that demand changes in their training organizations. For example, one such business imperative felt by the executives of many companies is need to accelerate their "clock speed" when introducing new or repositioning existing product offerings. A difficulty faced by learning systems in supporting this rapid change in business positioning is that many different individuals in a given company perform many different functions and therefore require different types of training to implement a single change in business position. Sales forces in particular must be effectively trained regarding new product features and value propositions before the best sales results can be obtained. Similarly, new positioning of existing products (e.g., pitching groups of products together as providing improved solutions to clients) requires sales forces to understand not just products individually, but their interplay in forming solutions for target clients in order to effectively implement this strategic business objective. The longer such training takes, the more the implementation of strategic business objectives is delayed.

Likewise, learning capabilities of a company must be able to support organization growth and expansion. Leaders of companies may be forced to forgo undertaking bold yet lucrative business growth plans, because bold growth plans require that the company has the ability to rapidly attract, train, and/or deploy a skilled workforce. Thus, improved learning capabilities are needed that accelerate the training speed and speed to competency of an entire workforce.

Similarly, company executives may have a business imperative requiring the initiation of a culture change within the company that will enable a pre-existing workforce to more easily adapt to the company's changing business focus. The delivery module and related platforms of learning solution must therefore also serve as a tool to drive culture change within an organization as an executive's desire to drive a new corporate mindset often has a strong learning component. Common culture change themes that require significant learning efforts include quality control changes, initiatives to increase shareholder value, and steps for adopting a customer-centric business focus.

In the same way, delivery of learning content in large organizations requires consistency for the learning experience that extends across various regions and instructors. Consistency of the learning delivery by an organization's trainers helps to establish a corporate identity and ensure the students in different regions or merged business units are uniformly prepared to present and adapt the organization's business strategy for any given market.

Furthermore, corporate mergers and reorganizations are commonplace occurrences in many of today's markets and industries. Such mergers and reorganizations often necessitate massive post-merger/reorganization integration efforts by the remaining companies. This not only requires reconciling pre-existing business goals and strategies, but also integrating and upgrading educational and training efforts within the remaining corporate entities. Improved delivery modules and related platforms are therefore needed to deal with such occurrences by being able to easily modify existing training efforts to match the changing business environment.

Moreover, the management of contemporary companies often view their companies' internal training organizations or efforts as bloated cost centers with very little visibility into cost allocation and virtually no accountability when it comes to returning adequate value on learning investments. Since companies are always looking across their organization to identify ways to manage costs, it would be beneficial if learning solutions were able to be used to allocate learning and training costs accurately across different business units and ventures so as to facilitate cost management. It would be further beneficial if such learning solutions could be used to generate strategic cost reductions or even spur or generate profits. With a proper learning solution, it is possible that training can be leveraged outside the organization for revenue growth and cost savings opportunities. Some examples of this include leveraging corporate knowledge in a new way to create a new source of revenue, using training to align value chain partners, or reducing support costs by placing information with the customer.

Increasingly, business organizations are recognizing the need for training organizations that are responsive to the foregoing business imperatives, and that can deliver results that align with the business strategy. The learning solutions currently applied in contemporary organizations fail to satisfy these imperatives.

For example, contemporary learning solutions may be comprised of separate modules such as business strategy alignment, content management, and delivery. The learning delivery process, whether incorporated as a discrete module of an overall learning solution or whole integrated within a corporate learning scheme, commands a significant portion of an organizations training resources. In contemporary organizations, the recognized value of training is tempered by the high cost and short-term productivity loss associated with traditional instructor-lead training environments. To attain maximum value, training organizations must achieve learning objectives while minimizing learning delivery costs. It is widely known in the corporate world that instructor-led training, and the associated travel, facilities, and materials production costs, is by far the most expensive training delivery method compared to other virtual or self study approaches. Any reduction in the amount of instructor-led training delivery that can be achieved will produce significant savings for an organization as a whole.

As another example, contemporary organizations often use their human resource departments or other administrative departments to offer instructor-led training courses for employees at a central location. While this approach may appear attractive from a purely financial perspective because it limits personnel and infrastructure costs, this solution becomes less suitable when the employee students are located in various remote areas (thus requiring travel) and/or have independent, conflicting schedules of availability for instruction. Furthermore, recruiting and training qualified instructors requires significant effort and specialized skills from a learning organization's coordinators. Thus, this approach is less suitable as the number of necessary instructors grows (such as where many courses are needed or where the same is course is needed in various languages).

Also, learning delivery efforts of contemporary learning solutions do not effectively capture user data to track present or anticipated demand of an organization's learning resources. Training needs can fluctuate a great deal in highly technical industries and industries with frequent product releases and product upgrades. To make the most efficient use of limited learning resources, organizations need a means of integrating product development forecasts into an organization's learning resources budget estimates. By compiling past user data and upcoming product development schedules, an organization could more effectively forecast its learning delivery needs and target specific business units, as necessary. This data is crucial to forecast future delivery needs so that training can be implemented without lag-time that is otherwise necessary to prepare delivery. Factors such as course content, learning media type, student demand, instructors, facilities, and equipment must be balanced to align delivery of course content with an organization's business needs. Effectively monitoring and balancing these factors will ensure that all solutions developed are consistent with an organization's vision and strategy, are ready to go to market on scheduled dates, and can contribute to customers' success by delivering solutions that improve the customer's productivity and efficiency.

Furthermore, coordinating and scheduling delivery of contemporary learning solutions within large national or multi-national organizations has been conducted on a regional basis. While regional-based training provides advantages such as reduced travel and more local coordination, regional-based training also multiplies training inefficiencies among an organization's various regions. A global delivery model that lets people know where, who and when training is going on anywhere in the global organization would allow an organization to optimize use of equipment, facilities and human resources.

Computers have been increasingly employed to address many of the logistical issues linked with coordinating the delivery of learning content and/or instruction that needs to be taught multiple times, that needs to be taught to large numbers of students who are remotely located, and/or that needs to be taught to a student body that has conflicting schedules of availability. For example, computer-delivered instruction systems are available wherein students can receive instruction via a computer over a network by accessing a central repository of previously prepared electronic learning ("e-learning") content courses and/or materials stored on a remote server. This approach can be used to provide independent, self-paced instruction on a student by student basis whereby each student can log on to the remote server and access desired e-learning instructional content at any time. Unfortunately, the compiling and maintenance of self-paced computer delivered training requires both subject matter and technical expertise and much development effort to approach the level of effectiveness of classroom training with an instructor. Additionally, such computer-delivered instruction systems are unfortunately not ideal for all types of learning needs, such as where group activities, student-to-student or student-to-instructor interaction are essential for optimum learning.

Computer networks have likewise been used to provide virtual classrooms where a single instructor teaches a large number of remotely located students simultaneously using web conferencing, remote presentation or like technologies. While the virtual classroom approach can reduce personnel, travel and physical infrastructure needs and still retains the flexibility of relatively easy course content updating, it docs not allow self-paced instruction for students having independent and conflicting schedules of availability. Students of a virtual classroom still have to "attend" class at a pre-scheduled time as opposed to reviewing computer delivered content whenever they have available time or wish to work on a given course. Furthermore, virtual classroom technologies can require that access for every remote student be made via a highly robust computer network capable of handling high bandwidth communications applications. Many organizations simply will not have the technical infrastructure to be able to utilize virtual classrooms for all of their learning needs.

Another disadvantage of contemporary learning solutions is that they fail to provide the ability for executives to monitor performance of learning solution efforts in achieving their underlying purpose of furthering business strategies. It would be helpful if executives had access to various performance or success metrics that measure the performance of a given learning solution similar in manner to how performance is measured in traditional performance driven areas of their core business. Useful metrics relating to a learning solution could include, for example, output-related metrics that indicate course hours produced or student days delivered, and metrics which attempt to quantify the success training is having in serving its intended purpose. The inability to accurately monitor performance metrics leaves organizations and their learning services with an inability to ensure service quality, allow for accurate resource forecasts, allocate costs and provide a means to measure the learning solution's success helping the organizations meet goals and commitments. This aspect makes it difficult for executives and learning administrators to make certain that ongoing and future learning efforts are continuously aligned with business strategies, priorities and goals.

Finally, organizations using contemporary learning solutions could benefit by outsourcing the learning delivery efforts to a third party. Such outsourcing would allow cost reduction through multi-client efficiencies and would provide a potential of generating revenue by developing content that can be delivered by the outsourced parties to other organizations. A delivery module implemented by an outsourced third party could be managed with the same built-in imperatives to reduce costs and drive profit centers and if it were within the organization.

Thus, there remains a need in the art for an improved delivery module and related platforms to support a transformational outsourcing learning solution that overcome the above-described and other problems associated with current learning solutions. Such a delivery module preferably utilizes a customizable blend of computerized on-line instructional systems and instructor based services that allow for the efficient distribution of course content and materials. The aforementioned delivery module and related methods should provide the ability to respond quickly and efficiently to logistical and resource concerns in order to minimize the time to achieve sales force competency.

### Summary of the Invention

In light of the above-described and other deficiencies inherent in delivery of contemporary learning solutions, it is an object of the present invention to provide a delivery module and related platforms and processes for a business driven learning solution that ensure that an organization's learning and training needs are provided in a manner that is responsive to the organizations dynamic business needs and are aligned with the business and learning objectives of that organization. Such delivery modules and related methods are capable of delivering high quality training across a plurality of media in a cost efficient manner.

Also, it is an object of the present invention to provide a delivery module and related platforms that capture user data to effectively forecast present or anticipated demand of an organization's learning resources. Thus, factors such as course content, learning media type, student demand, instructors, facilities, and equipment use are tracked to ensure that necessary training can be implemented without lag-time between identification of a training need and delivery.

Additionally, it is an object of the present invention to provide a delivery module and related platforms that centrally coordinates the delivery schedule of training across a global organization in order to allow an organization to optimize use of equipment, facilities and human resources.

Further, it is an object of the present invention to provide a delivery module and related platforms that adapt the delivery of desired instruction to the most suitable mechanisms, including instructor led training, virtual classroom training, computer delivered instruction, printed reading materials, and appropriate combinations thereof.

Moreover, it is an object of the present invention to provide a delivery module and related platforms such that the trainers are prepared to provide instruction on course content using a platform for delivery best practices. Thus, trainers receive instruction and undergo certification for subject matter knowledge, presentation competency, and effective use of delivery mechanisms (e.g., virtual instructor-led training or interactive web-based instruction), as applicable.

Additionally, it is an object of the present invention to provide a delivery module and related platforms that allocates learning costs and bills appropriate business units or projects for learning effort expenditures such that the solution can be implemented by a business partner or sub-unit organization operating independently like a separate business entity from the organization requesting/needing the learning services. In this manner, learning delivery needs of an organization can either be outsourced to a separate business entity or still managed internally as an independent business unit with the same built-in imperatives to reduce costs and drive profit centers as those business units and/or external organizations that will ultimately pay for the learning services.

Furthermore, it is an object of the present invention to provide a delivery module and related platforms that are embodied in a network of learning systems which facilitate the monitoring, organization, and reporting of training performance metrics that enable efficient coordination of learning efforts with business strategies and priorities.

To achieve these and other objects, the disclosed delivery module and related platforms and processes for a business driven learning solution according to the present invention manage the learning delivery of an organization in a manner that is highly responsive to dynamic business needs. Among other things, the delivery module and related platforms disclosed contain business processes and related tools for providing the delivery of high quality training across a plurality of media in a cost efficient manner. Furthermore, the delivery module according to the present invention allows learning demand forecasts to be continually updated across the entire organization in order to ensure learning delivery within strategic corporate timelines and without preparation lag-time.

Delivery modules according to embodiments of the present invention comprise four basic sub-modules of interrelated and interdependent business processes for the planning and coordination of delivering learning content, the execution of instructor led training (ILT) and virtual instructor led training (VILT), the coordination of follow-up services after training, and the overall support of each sub-module of the delivery effort. The interaction of the various modules of business processes with one another helps to define the services, performance metrics and application capabilities, among other things, required to support an optimized outsourced solution to meet a given organization's business learning objectives.

One of the four basic sub-modules of the learning solution comprises a delivery planning module to manage, coordinate and schedule ILT and VILT activities based on input from other modules of the organization's learning solution. Delivery modules according to the present invention also include a delivery execution sub-module that performs the activities required to prepare and execute an ILT and VILT training course. Delivery modules according to embodiments of the present invention also comprise a delivery wrap-up sub-module that is responsible for performing the necessary follow-up services after a course has been delivered. Additionally, delivery modules according to embodiments of the present invention may comprise a delivery operations sub-module that facilitates administrative services across the entire delivery module.

Embodiments of the learning solution of the present invention are preferably implemented in a network of learning platforms that together provide the electronic tools and information sharing capabilities needed by a learning solution services provider to efficiently implement and manage learning efforts according to the business desires of a complex learner organization. The platforms provide coordination and synchronization of learning content development, delivery and management so as to enhance the learning solution's response time to instructor, student, and/or resource concerns and issues. Such learning solution networks comprise a resources synchronization platform, a content development platform, an electronic delivery platform, and a learning administration platform, all of which communicating electronically with one another. Preferably, the learning solution networks also track information relating to the learning solution and its learning efforts and provide visibility of that information to facilitate business management processes.

Delivery methods for the training content are managed via the invention's delivery module and may include self-paced web, interactive web, and a blending of e-learning and live instructor-lead classroom training. The use of skilled instructors enables the sales force to receive specific feedback and participate in discussions focused on their customer's business needs and the value proposition of the training solution.

In preferred embodiments of the present invention the delivery module is implemented by an independent business entity that is acting according to a service level agreement with an organization in need of learning delivery outsourcing. A service level agreement is a contract between the learning solution services provider and the licensing (i.e., outsourcing) organization that establishes the requisite quality and effectiveness levels of the learning solution services as measured by one or more pre-selected performance metrics. Suitable metrics can relate to measurements of the output of a learning solution (e.g., instructional course-hours developed or delivered), measurements of performance level of learning efforts provided by the learning solution (c.g., student satisfaction, test and/or certification results), and measurements of the business impact of learning efforts (e.g., improvements in employee productivity following training). The terms of a service level agreement may require (as compared with the levels measured before the implementation of a given learning effort), for example, minimum learning-output metrics values relating to increases in student enrollment and course hours, minimum learning-performance metrics relating to employee certifications, and minimum learning-impact metric increases regarding gross sales generated by each trained salesperson. Such outsourccd learning solution track and report pre-selected performance metrics to the outsourcing organization on a continuous basis to facilitate cost allocation among appropriate business units or to specific learning efforts (equivalently, "training efforts"), and uses them according to business management processes within the learning solution to gauge the level of effectiveness of particular learning efforts in helping the organization reach desired business objectives and thus refine future learning efforts.

It is an object of the present invention to provide a delivery module for a business driven learning solution for managing the learning and training needs of an organization in a manner that is responsive to dynamic business needs, said module comprising sub-modules of interrelated and interdependent business processes, including:
a delivery planning sub-module containing related processes to manage, coordinate and schedule training activities based on input from other modules of said organization's learning solution;
a delivery execution sub-module containing related processes to prepare and execute said training activities; and
a delivery wrap-up sub-module containing related processes for performing the necessary follow-up services after said training activities are delivered. Preferably, said module comprises a delivery operations sub-module containing related processes to facilitate administrative services across the entire delivery module. More preferably, said business processes in said delivery operations sub-module are comprised of processes selected from the group consisting of process improvement, financial management, resource management, facilities management, marketing, performance analysis, delivery support plan maintenance, instructor certification, vendor/supplier management, remote learning services, proposals/projects, translation and localization, archive courses, and business partners programs.

In a preferred embodiment, said business processes in said delivery planning sub-module are comprised of a plan for new solutions process, a forecasting demand (sessions) process, a scheduling process, a registration and confirmation process, a development of a delivery support plan process, a knowledge transfer process, and an operational review process.

In a preferred embodiment, said business processes in said delivery execution sub-module are comprised of a field trial process, a train the trainer process, a prepare to teach process, a sending out of session materials process, a delivery of sessions process (e.g., instructor lead training, virtual instructor lead training, and Web-based), and a session set-up and breakdown processes.

In a further preferred embodiment, said business processes in said delivery wrap-up sub-module are comprised of a close sessions process and a quality control process.

Preferably, said means of executing said training activities is selected from the group consisting of instructor led training, virtual classroom training, self-paced training delivered via computer, and a blend of e-learning and live instructor lead training.

In a preferred embodiment, the training user data is captured to effectively forecast present or anticipated demand of an organization's learning resources; more preferably said user data is selected from the group consisting of course content, learning media type, student demand, instructors, facilities, equipment use, and any combination thereof

In a further preferred embodiment, said delivery planning sub-module includes use of a regional and global scheduling tool to manage information including instructor names, course locations, method of course delivery, and materials and equipment used to teach the course.

Preferably, predefined metrics selected from the group consisting of Kirkpatrick's Levels 1, 2 and 3 assessments are measured and reported.

In a further preferred embodiment, trainers receive instruction and field test, subject matter knowledge, presentation competency, and effective use of delivery mechanisms prior to delivering training.

In a further preferred embodiment, said module accepts course content materials from a development module via a network of electronic learning platforms.

In a further embodiment, learning delivery services are implemented by an independent business entity that is acting according to a service level agreement with an organization in need of learning delivery outsourcing, said service level agreement establishing requisite quality and effectiveness levels of said learning delivery services as measured by one or more pre-selected performance metrics.

It is a further object of the present invention to provide a method for delivering to members of an organization learning services that are responsive to an organization's dynamic business needs, said method comprising the steps of:
managing training delivery based on business strategy provided from other modules of said organization's learning solution;
collecting training user data to effectively forecast demand of an organization's learning resources;
scheduling said organization's training delivery schedule in order to allow said organization to optimize use of equipment, facilities, and human resources;
preparing said training activities based on the course content provided from other modules of said organization's learning solution;
executing said training activities; and
performing the necessary follow-up services after said training activities are delivered.

Preferably, the step of collecting training user data includes collection of course content, learning media type, student demand, instructors, facilities, and equipment use.

Preferably, said step of scheduling training further comprises use of a global, vice regional, scheduling tool.

Preferably, the step of preparing said training activities further comprises providing trainers with instruction in the training subject matter, instruction in presentation delivery, and instruction in effective use of delivery mediums.

In a further preferred embodiment, said step of executing said training activities is accomplished by instructor led training, virtual classroom training, self-paced training delivered via computer, or a blend of e-learning and live instructor lead training.

The invention having been thus described, preferred embodiments thereof will now be described in detail with reference to the following figure.

### Brief Description of the Drawings

Fig. 1 is a schematic diagram depicting the interaction of the basic modules of a business driven learning solution according to embodiments of the present invention.
Fig. 2 is a schematic diagram depicting the interaction of delivery sub-modules of a learning solution according to embodiments of the present invention.
Figs. 3a through 3c are schematic diagrams depicting a possible flow sequence for the processes that comprise the delivery sub-modules of a learning solution according to embodiments of the present invention.

### Detailed Description of the Preferred Embodiments

As used hereafter, the term "organization" is used broadly to identify the business entity that is in need of a solution to provide learning services. The learning solutions according to the present invention can either be outsourced by such organizations (whereby the processes of the learning solution are implemented by a third party learning services provider under contract to an organization) or can be implemented internally within the organization (as, for example, an independent business unit within the "outsourcing" organization). In embodiments of the invention wherein a learning services business unit within an organization provides learning services to other business units within the organization, the learning services business unit would still feel the need to satisfy customers as it would be responsible for generating a "profit" by meeting predefined performance metrics set by "client" business units (i.e., the other more traditional business units of the organization) and allocating learning effort charges as expenses to the client business units as appropriate. In this manner, the learning solutions according to the present invention can be said to be "outsourceable" by an organization.

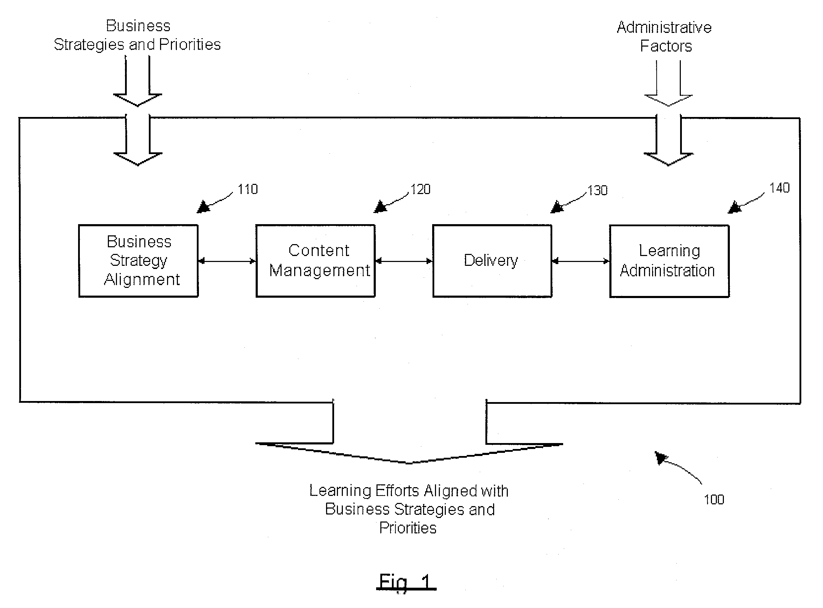

A business driven learning solution 100 is conceptually depicted in the schematic diagram of Fig. 1. Solution 100 comprises modules of interrelated and interdependent business processes, along with appropriate tools for efficiently implementing these processes according to the business desires of the organization. The interaction of the various modules of business processes with one another helps to define the services, performance metrics and application capabilities, among other things, required to support an optimized outsourced solution to meet a given organization's business learning objectives.

As depicted in Fig. 1, business strategy alignment module 110 utilizes processes and tools (as described below) to accept business strategies from the organization. It then aligns the organization's learning goals and training efforts with the organization's current strategy, business objectives and organizational structure. The business strategy alignment processes identify the learning objectives of the organization, and assist in developing and delivering a particular curriculum by providing relevant information to processes in the various other modules of solution 100. This alignment ensures that learning curricula is designed to meet the organization's most current needs.

Once solution 100 identifies what types of learning or curriculum are desired and/or required by the organization, the solution is also able to deliver suitable learning materials to fill those needs. Content management module 120 includes processes and associated tools required to build and/or buy appropriate learning content based upon learning objectives and delivery requirements. As will be readily appreciated by one of ordinary skill in the art, it will not always be the best approach for the learning solution 100 to internally develop deliverable learning content in response to a learning effort requested by the organization. On one hand, time constraints, subject matter constraints, and other logistical issues may make it more cost effective for the learning solution to purchase or license previously developed learning content as opposed to developing or compiling new content. Alternatively, the specialized needs of the organization may make it difficult to utilize outsourced or precompiled content. Content management module 120 facilitates solution 100 taking factors such as these appropriately into consideration when assembling suitable learning content.

Once learning content has either been obtained from a third party or developed internally, business processes and associated tools of content management module 120 create, manage and operate a central repository of learning content and knowledge objects. Content management business processes contained in module 120 tag and catalog learning content and knowledge objects appropriately such that they can be reused as appropriate and may be easily accessed for delivery to the learner when necessary.

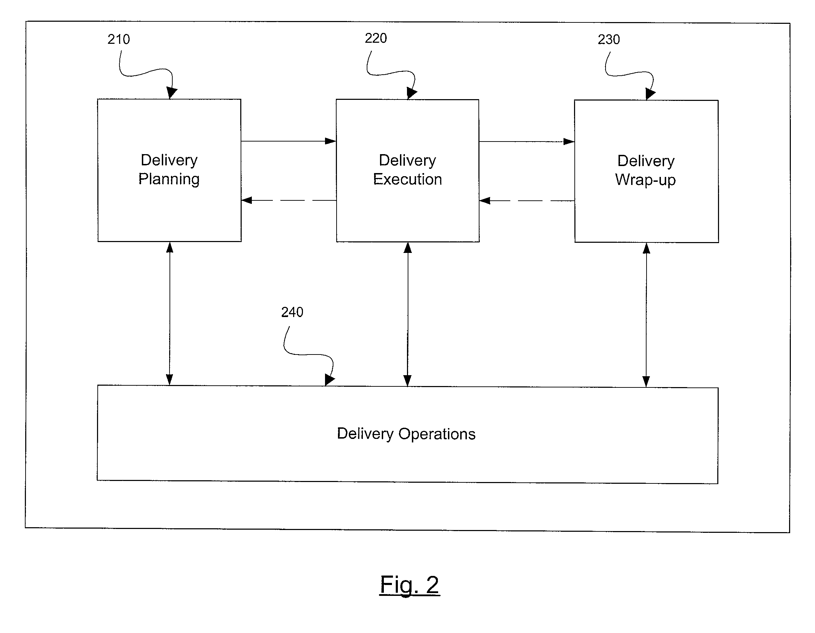

Delivery module 130 in turn contains business processes and related tools for providing the delivery of high quality training across a plurality of media in a cost efficient manner. Suitable mechanisms and media by which learning content may be delivered to students according to embodiments of the present invention can include combinations of computer-delivered or web-based courses available over electronic networks (such as the Internet) for self-paced instruction, interactive virtual classroom instruction and related media (both video and animation) available over electronic networks which utilize instructors to lead classrooms of remotely located students, in person instructor-led training, and paper-based products used in conjunction with by self-paced or instructor training. Further, the delivery business processes in module 130 manage coordinating the scheduling of the facilities where training takes place with appropriate instructor and learner commitments. An embodiment of the delivery module 130 may include sub-modules, which contain sub-sets of the delivery processes. Examples of the sub-modules are illustrated in Fig. 2.

Turning to Fig. 2, this figure shows delivery planning sub-module 210, delivery execution sub-module 220, delivery wrap-up sub-module 230, and delivery operations sub-module 240. The delivery planning sub-module 210 and the delivery wrap-up sub-module 230 may serve as communication interfaces between the delivery module 130 and both the business strategy alignment module 110 and content management module 120. The delivery operations sub-module 240 may serve as a communication interface between the delivery module 130 and third-party providers, such as Education Service Providers (ESPs) and Value Added Distributors (VADs).

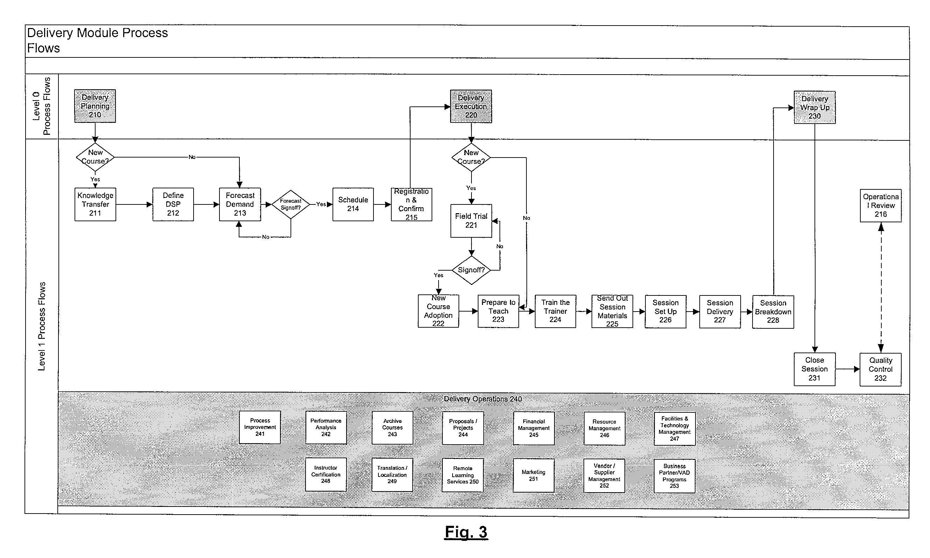

As shown in Figs. 3a, 3b and 3c, delivery planning sub-module 210 contains processes including the plan for new solutions process 210, knowledge transfer process 211, defme a Delivery Support Plan (DSP) process 212, forecasting demand process 213, schedule process 214, registration and confirmation process 215, and operational review process 216.

The knowledge transfer process 211 defines how delivery planning sub-module 210 receives knowledge of new products or releases. This process is kicked off when an enterprise launches a new product/release. The enterprise will inform their delivery organization about the upcoming new product. The delivery organization will work with the product developers and subject matter experts during the training course development. The delivery organization will also participate in the knowledge transfer, which is held by regional research and development experts.

The defme the Delivery Support Plan (DSP) process 212 involves establishing relevant criteria to prioritize the delivery of an organization's learning. The DSP is a tool or document that is created and grows throughout the delivery process. For example, all of the information about a new course that is being forecasted or demanded from an enterprise is inputted into the DSP. The information and data within the DSP can then be used to aid in future forecasting and demands for courses, e.g., used as a demand aggregation tool. The DSP takes specific business needs, audience types, geographic locations, language requirements, course content, media type, student demand, instructors, facilities, equipment, and other factors into account in an effort to align the organization's delivery of course content with the strategic business objectives.

The forecast demand process 213 describes the steps performed in order to collect a learning demand forecast and build a preliminary forecast. On the basis of the preliminary forecast a scheduling and forecasting team will then create the forecast according to which a schedule is built. The forecast, for example, may be loaded into or created with an electronic tool that enables multi-dimensional views of the information, thereby enabling forecasters to understand and utilize information in a holistic manner for schedule optimization.

The schedule process 214 captures how the scheduling team will handle proactive and reactive (ad-hoc) requests from delivery for scheduling ILT courses. The process depicts how the schedule takes a regular schedule, such as a quarterly or semi-annual schedule, from forecast to plan to a scheduled sessions in a central data repository. Scheduling utilizes the central data repository and a preliminary scheduling tool to manage the schedule. The scheduling process may include regional and global scheduling. In both cases, a scheduling tool may be used to manage information that includes the names of the instructors who are teaching each course, the skills they possess that enable them to teach, the location of where the course is being taught and its method of delivery, the average travel and expenses estimated to teach the course, and the materials and equipment that are being used by the instructor to teach the course. In addition, a resource management tool may be used to assist the schedulers in creating non-conflicting sessions. Such schedules can be created flexibly, with approximately 50% of the demand scheduled six months out with the other 50% scheduled five, four and three months prior to the delivery sessions in question.

The registration and confirmation process 215 manages the under/over-utilization of courses, instructors, facilities, delivery equipment and necessary distance learning services. This includes the canceling, rescheduling and adding of courses based on enrollment demand and business needs.

The operational review process 216 funnels information about the delivery organization to senior delivery management. The process receives performance analysis and process improvement inputs that are based on the current quality in the classroom. A depiction of how the process relates to delivery is a triangular relationship between performance analysis and process improvement with operational review as the peak of the triangle.

Turning next to the delivery execution sub-module 220, which is communicatively coupled to the delivery planning sub-module 210, this sub-module contains processes including the field trial process 221, new course adoption process 222, prepare to teach process 223, train the trainer process 224, sending out session materials process 225, session set-up process 226, delivery of sessions process 227, and session breakdown process 228.

The field trial process 221 involves a "one time" pilot of a course that is delivered by an instructor subject matter expert. Other instructors attend the field trial as students. The field test provides the opportunity to evaluate the effectiveness of the proposed course content and presentation methods. The field trial may also serve as an observation forum for students in the train the trainer process 224.

The new course adoption process 222 describes the notification between learning content developers and the delivery organization in respect to the deployment of new or recently updated courseware. This process formalizes a "passing of the baton" from the course developers to the delivers, in effect memorializing the acceptability of the content for introduction into production.

The prepare to teach process 223 describes the steps an instructor performs prior to participating in any training or delivery activity. These activities may include a train the trainer workshop, any knowledge transfer event, delivery of an actual session, or any self-development activities (e.g., enhancing presentation skills). As a part of this process, the instructor will continuously assess his skills and product knowledge to determine if he needs to coordinate additional training. Based on the instructor's scheduled activities, they will coordinate the logistics and travel arrangements, and perform any other necessary preparations (e.g., update passport/visa, perform audience analysis to better understand the students' culture or background, read language books to better communicate course material, etc.) Additionally, for courses requiring delivery of resources (sending course materials to an off-site training location, e.g., hotcl), the instructor will help ensure the delivery of course materials at the off-site training location.

The train the trainer process 224 outlines activities critical to the preparation of an instructor in respect to the delivery of a session. In particular, the train the trainer process provides a means for instructors to learn how best to teach certain contents, including by providing lists of recommended goals for the instructor to accomplish during the course. For the delivery of any new course, a scrics of activities arc arranged to bring the instructor up to speed on the course content as well as provide a platform for delivery best practices. The instructor may attend a knowledge transfer event (when available) to become familiar with the product and its technologies. The instructor may also attend a field trial (when available) and a train the trainer workshop to reinforce their understanding of the content/course materials, as well as learn how to best present and facilitate the course in a classroom setting. Instructors who will be teaching VILT courses will attend VILT rehearsal sessions to both enhance their understanding of the course content and the delivery software, along with obtaining delivery techniques when acting as a moderator for a course conducted virtually. Any feedback regarding course content will be relayed to the instructor subject matter expert who will compile the feedback and arrange with the learning organization to incorporate in updates or future releases.

The send out session materials process 225 describes the ordering, reproduction, and delivery of course materials of the training location. Course materials in the context of this process refer to materials that will accompany instructor led training and self-paced courses. As part of the send out session materials process, any new or updated course materials need to be packaged and delivered to either reproduction providers or electronically delivered directly to the course location for local access. A local member of the delivery organization will be responsible for ordering the course materials and validating that they are received by the training location according to schedule. Courses that require delivery of resources will also be ordered by the local member of the delivery organization; however, the instructor will be responsible for validating that the course materials successfully arrived at the training site (e.g., hotel conference room).

The session setup process 226 describes the steps involved with preparing a classroom for the delivery of a session. This includes properly loading both the desktops and servers, uploading any additional desktop software, creating software images that enable learners to complete course activities for new products and verifying that the class roster matches the scheduling system roster.

The delivery of sessions process 227 involves the actual course delivery via instructor lead training (ILT), Virtual ILT, or Web-based presentation.

The session breakdown process 228 describes the steps involved with breaking down a classroom once a session has been delivered. This includes collecting both the student roster and assessments (such as Kirkpatrick's Level 1 and Level 2 assessments) from the students, distributing student certificates, refreshing both desktop and server systems and returning any borrowed equipment.

As depicted in Fig. 2, the deliver wrap-up sub-module 230 is communicatively coupled to the delivery execution sub-module 220. The delivery wrap-up sub-module 230, as shown in Fig. 3, contains processes including the close sessions process 231 and the quality control process 232.

The close session process 231 is the final step to complete a session. This process involves the instructors logging into the central data repository to input student assessment results if not automatically generated, and enables immediate feedback from the course including constructive suggestions of instructor improvements and course content improvements. This process also allows the instructor the opportunity to suggest facility and equipment improvements as a result of the assessments. The quality control process 232 relates to the management of the performance and quality of instruction, including both internal and third party instructors. For example, standards are set and checklists are reviewed.

As described above, the delivery operations sub-module 240 may serve as a communication interface between the delivery module 130 and third-party providers, such as Education Service Providers (ESPs) and Value Added Distributors (VADs). Processes contained in this sub-module include process improvement 241, performance analysis 242, archive courses 243, proposals/projects 244, fmancial management 245, resource management 246, facilities and technology management 247, instructor certification 248, translation and localization 249, remote learning services 250, marketing 251, vendor/supplier management 252, and business partners/VAD programs 253. In an embodiment, the scheduling tool described above with regard to schedule planning process 214, may also be used to help in the resource management process 246 and the facilities management process 247 of the delivery operation sub-module 240.

The process improvement process 241 outlines the necessary steps for monitoring the success of current delivery processes, along with the planning, design, and deployment of any new or updated processes based on business need. The process focuses on four man functional areas or phases, which include the capturing of data (capture), planning of future enhancements (plan), the design of successful processes (design), and implementation of process changes to the delivery team (implement). The capture functional area describes the inputs into the process. The next functional area, plan, deals with the analysis, validation, and planning based upon the input received. Based on the work plan, several design activities may be initiated to enhance existing processes or build new ones based on business need. Once the processes have been defmed and approved by all stakeholders, they will be implemented into the delivery organization.

The performance analysis process 242 describes the compiling of data and preparation involved in the generation of performance reports for the delivery organization. Performance reports can be generated, for example, on a monthly basis or through ad hoc requests. These reports will be analyzed for data trends and/or irregularities or outliers within the delivery organization. Any data irregularities will be validated across the delivery organization and other impacted areas. Once verified, the performance analyst can provide a report (e.g., a scorecard) that will be delivered to the sales-based organization. The performance analysis process may also include the gathering of learner behavior modification information (also known as Kirkpatrick's Level 3 assessments).

The archive courses process 243 requires properly indexing and storing learning course content that is no longer utilized or requested. Archiving content provides the benefit of allowing the content to be made available for future use or reference.

The projects and proposals process 244 is kicked off when a request for a training project is submitted by either a customer, instructor, or third party business partner. After a request arrives, a formal proposal is created and submitted for approval. After approval, this process 244 describes the steps that have to be conducted during planning, execution and wrap-up phases. Planning, for example, would include determining instructor and facility availability. Execution may include verifying course development and ensuring appropriate instructor training. Wrap-up may include, for example, ensuring equipment used for training is shipped back to the organization, providing a status report to the organization, and gathering student feedback. This, for example, is necessary where there is a business need that can be satisfied by bundling courses and/or classes in a specific geography and time period.

The financial management process 245 utilizes past actual financial data, internal cost projections, labor forecasts, external cost projections, scheduling times and annual demand forecast to create a yearly cost forecast specific to the delivery organization. The forecast can be based by country and assists the finance team in the creation of the overall yearly budget for the sales-based organization.

The resource management process 246 is the process of planning, preparing, and fulfilling the demand for instructor for ILT sessions. The resource management process includes the management of instructors, by determining their eligibility to teach a certain curriculum and by cultivating their career growth. Also included in the process is the analysis of utilization and quarterly preparations to meet the scheduled demand as well as respond to ad hoc requests from schedule.

The facilities and technology management process 247 involves managing the buildings and equipment necessary for delivery of the curriculum. This process also involves performing inventory checks of the equipment.

The instructor certification process 248 interfaces with the train the trainer process 224 described above. Instructor certification relates to the process of certifying internal instructors, as well as third-party instructors. For each course, the process requires defining the certification criteria and continuously monitoring the instructor quality.

The translation/localization process 249 determines whether the targeted materials' content can be delivered in any market and that the product determines whether the targeted material's content can be delivered in any market and that the product information, company content, software interfaces, etc., for a given locale are accurate and valid.

Remote learning services 250 captures how a learning delivery organization conducts the life cycle of a VILT course. The process depicts from conception of a course through delivery and fulfillment of course products. The process may includes steps previously described, such as field trial process 221 and schedule process 214, and prepare to teach process 223.

The marketing process 251 describes how members of a learning delivery organization provide an organization's marketing department with specific information for marketing communication efforts. This information includes forecasted demand, instructor course feedback, newly created or cancelled training session information, and course performance information. Based on this information, the marketing department can accurately assess and communicate to the relevant target audience.

Vendor/supplier management process 252 includes identifying the top vendors, defining service needs and managing service levels. These efforts require communicating vendor certification status (e.g., passed or failed) and vendor delivery issues to the appropriate vendor management.

Business partners/VAD programs process 253 includes the steps of identifying key relationships with third-party businesses or VADs who have the capability, desire and business need to deliver training either internally or on the behalf of the delivery module. Support of third-party businesses or VADs include train the trainer, instructor certification, instructor mentoring, and access to electronic information repositories.

While exemplary embodiments of the invention have been shown and described herein, it will be obvious to those skilled in the art such embodiments are provided by way of example only. Numerous insubstantial variations, changes, and substitutions will now be apparent to those skilled in the art without departing from the scope of the invention disclosed herein by the Applicants. Accordingly, it is intended that the invention be limited only by the spirit and scope by the claims as appended hereto.

## Claims

1. An electronic delivery platform adapted to transmit electronic learning content from an electronic central data repository of electronic learning content, **characterized in that** said delivery platform comprises means for tracking information describing electronic learning content delivered for instruction, a tracking information database for storing said tracking information, a scheduling tool that enables users centrally to manage information including instructor names, course locations, course delivery, and materials and equipment used to teach the course by tracking said information in a scheduling database, and a delivery support plan tool that enables users centrally to aggregate data concerning and produce forecasts of demand for learning resources, wherein tracking information is captured in real time during delivery of said electronic learning content and stored in said electronic central data repository for use by said delivery support plan tool to produce reports that forecast present or anticipated demand of learning resources of said delivery platform.

2. The electronic delivery platform according to claim 1, wherein said delivery platform further comprises a delivery operations processes to facilitate administrative services across the entire delivery platform.

3. The electronic delivery platform according to claim 2, wherein said reports are directed to assist in areas selected from the group consisting of process improvement, financial management, resource management, facilities management, marketing, performance analysis, delivery support plan maintenance, instructor certification, vendor/supplier management, remote learning services, proposals/projects, translation and localization, archive courses, and business partners programs.

4. The electronic delivery platform according to claim 1, wherein said delivery platform provides registration and confirmation functionality to users.

5. The electronic delivery platform according to claim 1, wherein said delivery platform performs delivery execution processes that include electronic session set-up and breakdown processes.

6. The electronic delivery platform according to claim 1, wherein said delivery platform performs delivery wrap-up processes that automate a close sessions process and a quality control process.

7. The electronic delivery platform according to claim 1, further comprising wherein means of executing training activities.

8. The electronic delivery platform according to claim 7, wherein training activities captures user data automatically by means of executing said training activities.

9. The electronic delivery platform according to claim 8, wherein said user data is selected from the group consisting of course content, learning media type, student demand, instructors, facilities, equipment use, and any combination thereof.

10. The electronic delivery platform according to claim 1, wherein said scheduling tool manages information including instructor names, course locations, method of course delivery, and materials and equipment used to teach the course.

11. The electronic delivery platform according to claim 1, wherein said delivery execution processes capture predefined metrics selected from the group consisting of Kirkpatrick's Levels 1, 2 and 3 assessments.

12. The electronic delivery platform according to claim 1, further comprising interfaces to a resources synchronization platform, a content development platform, and a learning administration platform.

13. The electronic delivery platform according to claim 1, wherein said module accepts course content materials from a content development platform via said network of learning platforms.

14. The electronic delivery platform according to claim 1, wherein said electronic delivery platform is operated by an independent business entity that is acting according to a service level agreement with an organization in need of learning delivery outsourcing, said service level agreement establishing requisite quality and effectiveness levels of said learning delivery services as measured by one or more pre-selected performance metrics, and data concerning at least some of said metrics being maintained in said electronic central data repository.

15. The electronic delivery platform according to any of the preceding claims, wherein said electronic central data repository is a repository of meta data tagged electronic learning content.
